# EUROPEAN PATENT APPLICATION

(11) **EP 3 611 881 A1**
(43) Date of publication of application: **19.02.2020**
(21) Application number: 19192026.3
(22) Date of filing: 16.08.2019
(51) Int. Cl.: H04L 12/46, H04W 4/70

(54) **METHOD AND APPARATUS FOR PROVIDING 5GLAN SERVICE TO A TERMINAL DEVICE**

(30) Priority: 16.08.2018 US 201862719100 P; 20.11.2018 US 201862769576 P; 03.07.2019 TW 108123499
(71) Applicant: Industrial Technology Research Institute, 31040 Hsinchu (TW)
(72) Inventor: LAI, Chia-Lin, 701 Tainan City (TW); TAN, Tze-Jie, 300 Hsinchu City (TW)
(74) Representative: Becker & Kurig Partnerschaft Patentanwälte PartmbB

(57) **Abstract**

A method of providing LAN service based on a 5G communication network and a terminal device and a server using the same are provided. The method adapted to the terminal device includes: receiving a service ID list broadcasted by the 5G communication network; registering to an isolated 5G core network according to the service ID list so as to obtain an allowed service ID list; transmitting a request message according to the allowed service ID list so as to obtain packet data unit (PDU) session establishment parameter(s) corresponding to a service group in the isolated 5G core network; and communicating with an electronic device in the service group according to the PDU session establishment parameter(s).

## Description

### TECHNICAL FIELD

The disclosure relates to a method of providing 5GLAN service and a terminal device and a server using the same.

### BACKGROUND

Considering information security, a vertical industrial network or an enterprise network can be implemented by Ethernet-based local area network (LAN) with coverage of LAN extended based on a wireless network technology such as Wi-Fi and the like. Ethernet-based LAN is secure but inconvenient for users. When a user intends to connect to LAN, the user needs to use a terminal device with an access right to LAN or go through a virtual private network or a firewall in order to access enterprise internal information. In addition, it may take a lot of time and money to build up a wired network.

With the advancement of a fifth generation (5G) communication technology, finding a way to use a 5G communication network to provide LAN service is one of the research topic for persons skilled in the art.

### SUMMARY

The disclosure provides a method of providing LAN service based on the 5G communication network and a terminal device and a server using the same.

The method of providing LAN service based on the 5G communication network of the disclosure is adapted to a terminal device. The method includes: receiving a service ID list broadcasted by the 5G communication network; registering to an isolated 5G core network according to the service ID list so as to obtain an allowed service ID list; transmitting a request message according to the allowed service ID list so as to obtain a packet data unit (PDU) session establishment parameter corresponding to a service group in the isolated 5G core network; and communicate with an electronic device in the service group according to the PDU session establishment parameter.

In an embodiment of the disclosure, the step of registering to the isolated 5G core network according to the service ID list so as to obtain the allowed service ID list includes: camping on the 5G communication network in response to the service ID list; detecting the isolated 5G core network on the 5G communication network; and registering to the isolated 5G core network.

In an embodiment of the disclosure, the step of transmitting the request message according to the allowed service ID list so as to obtain the PDU session establishment parameter corresponding to the service group in the isolated 5G core network includes: verifying whether a service ID corresponding to a to-be-requested service is in the allowed service ID list; and based on the service ID corresponding to the to-be-requested service in the allowed service ID list, transmitting a PDU session establishment request including the service ID to the 5G communication network.

In an embodiment of the disclosure, the step of transmitting the request message according to the allowed service ID list so as to obtain the PDU session establishment parameter corresponding to the service group in the isolated 5G core network includes: verifying whether a service ID corresponding to a to-be-requested service is in the allowed service ID list; and based on the service ID corresponding to the to-be-requested service not in the allowed service ID list, transmitting a first service request including the service ID to the 5G communication network so as to query the isolated 5G core network if the to-be-requested service is available through the 5G communication network.

In an embodiment of the disclosure, the PDU session establishment parameter includes a member list of the service group and an ID of the service group.

In an embodiment of the disclosure, the step of communicating with the electronic device in the service group according to the PDU session establishment parameter includes: transmitting a second service request to the 5G communication network, wherein the second service request includes the ID of the service group and a member ID corresponding to the electronic device; receiving an acceptance corresponding to the second service request; and establishing a radio resource control layer connection with the electronic device through the 5G communication network in response to the acceptance.

In an embodiment of the disclosure, the service ID list is broadcasted through a system information block.

In an embodiment of the disclosure, the method further includes: unregistering to a public land mobile network currently serving the terminal device in response to registering to the isolated 5G core network.

In an embodiment of the disclosure, the 5G communication network supports a plurality of 5G core networks including the isolated 5G core network.

The method of providing LAN service based on the 5G communication network of the disclosure is adapted to a server. The method includes: receiving a private data network name (P-DNN) from a terminal device through the 5G communication network and obtaining a packet data unit (PDU) session establishment parameter corresponding to a service group of the P-DNN; transmitting the PDU session establishment parameter to the terminal device; receiving a service request corresponding to the PDU session establishment parameter from the terminal device; and establishing a communication channel between the terminal device and the electronic device in the service group according to the service request.

In an embodiment of the disclosure, the step of receiving the P-DNN from the terminal device and obtaining the PDU session establishment parameter corresponding to the service group of the P-DNN includes: determining whether the service group corresponding to the P-DNN is available based on a service ID corresponding to the P-DNN not in the service ID list, and generating a determination result; and reporting the determination result to the terminal device.

In an embodiment of the disclosure, the step of receiving the P-DNN from the terminal device and obtaining the PDU session establishment parameter corresponding to the service group of the P-DNN includes: obtaining the PDU session establishment parameter from a unified data repository network function according to the P-DNN.

In an embodiment of the disclosure, the step of receiving the P-DNN from the terminal device and obtaining the PDU session establishment parameter corresponding to the service group of the P-DNN includes: establishing the service group according to the P-DNN.

In an embodiment of the disclosure, the PDU session establishment parameter includes a member list of the service group and an ID of the service group.

In an embodiment of the disclosure, the step of establishing the communication channel between the terminal device and the electronic device in the service group according to the service request includes: establishing or updating the member list of the service group according to the service request.

In an embodiment of the disclosure, the method further includes: selecting a user plane function corresponding to the communication channel according to the service request; and forwarding a packet detection rule corresponding to the communication channel to the user plane function.

In an embodiment of the disclosure, the server corresponds to a session management function in the isolated 5G core network.

A terminal device of the disclosure supports a 5G communication network. The terminal device includes a transceiver and a processor. The processor is coupled to the transceiver, and the processor is configured to: receive a service ID list broadcasted by the 5G communication network through the transceiver; register to an isolated 5G core network according to the service ID list so as to obtain an allowed service ID list through the transceiver; transmit a request message through the transceiver according to the allowed service ID list so as to obtain a packet data unit (PDU) session establishment parameter corresponding to a service group in the isolated 5G core network; and communicate with an electronic device in the service group according to the PDU session establishment parameter.

A server of the disclosure supports a 5G communication network. The server includes a transceiver and a processor. The processor is coupled to the transceiver, and the processor is configured to: receive a private data network name (P-DNN) from a terminal device through the 5G communication network and obtain a packet data unit (PDU) session establishment parameter corresponding to a service group of the P-DNN by using the transceiver; transmit the PDU session establishment parameter to the terminal device through the transceiver; receive a service request corresponding to the PDU session establishment parameter from the terminal device through the transceiver; and establish a communication channel between the terminal device and the electronic device in the service group according to the service request.

Based on the above, the terminal device of the disclosure can register to the isolated 5G core network by receiving the broadcasted service ID list so the isolated 5G core network is provided to the employees in the enterprise for use as LAN. According to the method provided by the disclosure, the enterprise can establish the 5G core network having the capability of providing LAN service so that the employees can join or leave the service groups established in LAN at any time simply by holding the terminal device that supports the 5G communication network. Further, each of the service groups is capable of operating independently with each other, or interworking with the public land mobile network (PLMN). Moreover, the terminal devices between the service groups can initiate one-to-one or one-to-many communication with the terminal devices of the same service group.

To make the above features and advantages of the present disclosure more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 illustrates architecture of LAN based on a 5G communication network technology according to an embodiment of the disclosure.
FIG. 2 illustrates architecture of the isolated 5G core network according to an embodiment of the disclosure.
FIG. 3 illustrates a signaling diagram of the terminal device registering to the isolated 5G core network according to an embodiment of the disclosure.
FIG. 4 illustrates a signaling diagram of the terminal device triggering a packet data unit session establishment in the isolated 5G core network according to an embodiment of the disclosure.
FIG. 5 illustrates a signaling diagram of the terminal device triggering a service request procedure according to an embodiment of the disclosure.
FIG. 6 illustrates a schematic diagram of the terminal device according to an embodiment of the disclosure.
FIG. 7 illustrates a flowchart of a method of providing LAN service based on a 5G communication network according to an embodiment of the disclosure.
FIG. 8 illustrates a schematic diagram of a session management function according to an embodiment of the disclosure.
FIG. 9 illustrates a flowchart of a method of providing LAN service based on a 5G communication network according to an embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

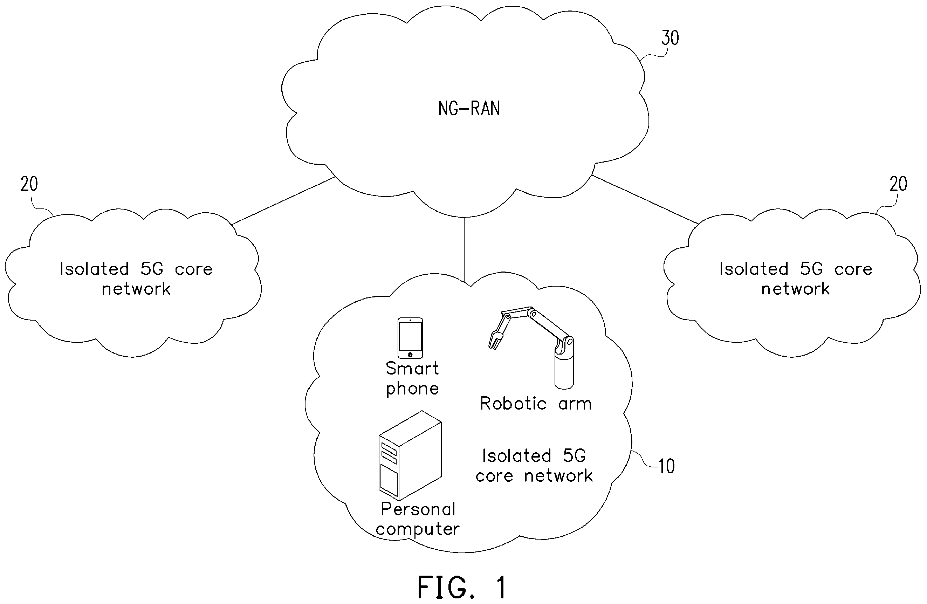

FIG. 1 illustrates architecture of LAN based on a 5G communication network technology according to an embodiment of the disclosure. It should be noted that, technical terms used in the disclosure and the concept corresponding to the technical terms are identical or similar to those in 3GPP TS 23.501, 3GPP TS 23.502 and/or TR 23.734. As shown in FIG. 1, an NG-RAN (next generation radio access network) 30 based on the 5G communication technology can support a plurality of isolated 5G core networks, such as isolated 5G core networks 10 or 20. Each of the isolated 5G core networks can operate independently with each other. The isolated 5G core network may be used to provide LAN service. For example, the isolated 5G core network 10 can provide LAN service based on the 5G communication technology to terminal devices in a service group so those terminal devices can communicate with each other in the service group corresponding to the 5G core network 10. The terminal devices in the service group may be a variety of electronic devices that support the 5G communication technology, such as a smart phone, a personal computer (or a notebook computer) or a robotic arm, etc., but the disclosure is not limited thereto. In an embodiment of the disclosure, for example, the existing network functions in the 5G core network described in 3GPP engineering report TR 23.734 may be adopted to provide LAN service (LAN based on 5G technology may also be referred to as "5GLAN"), and 5GLAN may be used to achieve a group communication (e.g., one-to-one or one-to-many communication between groups).

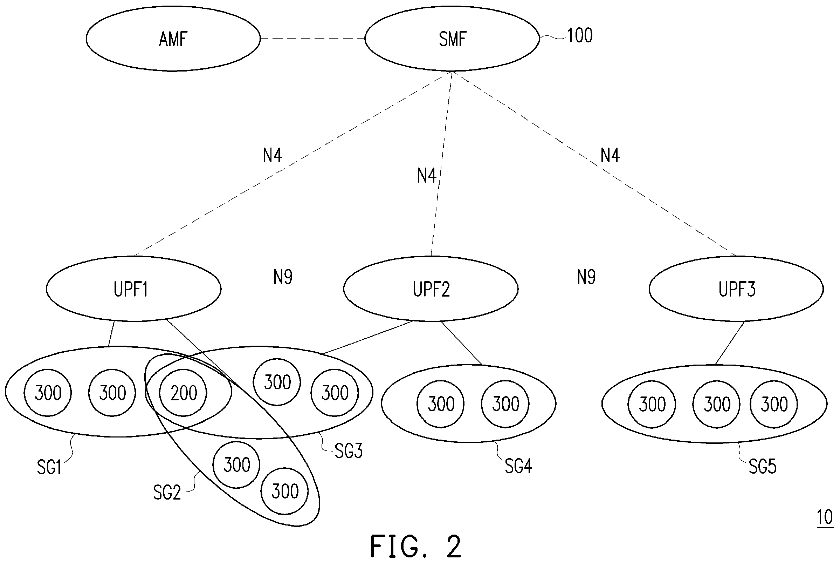

FIG. 2 illustrates architecture of the isolated 5G core network 10 according to an embodiment of the disclosure. As shown in FIG. 2, the 5G core network 10 at least includes an AMF (access and mobility management function), a SMF (session management function) 100 and a UPF (user plane function), wherein an N4 interface is provided between the SMF 100 and the UPF and an N9 interface is provided between two said UPFs. The UPF may also be used as a packet data unit session anchor (PSA). Each UPF (e.g., UPF1, UPF2 and UPF3) can manage one or more service groups having different IDs. For example, the UPF1 can manage the service groups with the IDs of SG1 and SG2; the UPF2 can manage the service groups with the IDs of SG3 and SG4; and the UF3 can manage the service groups with the ID of SG5. Different terminal devices can join to one or more service groups. For example, a terminal device 300 can only join one single service group, and a terminal device 200 may join the service groups SG1, SG2 and SG3 at the same time. The service groups SG1, SG2, SG3, SG4 and SG5 operate independently with each other. Each member of the service group (i.e., the terminal device) has a different member ID. The IDs may be used as a reference for communication between the members. Each of the service groups has a corresponding member list, wherein the member list records the member ID of each member in the service group.

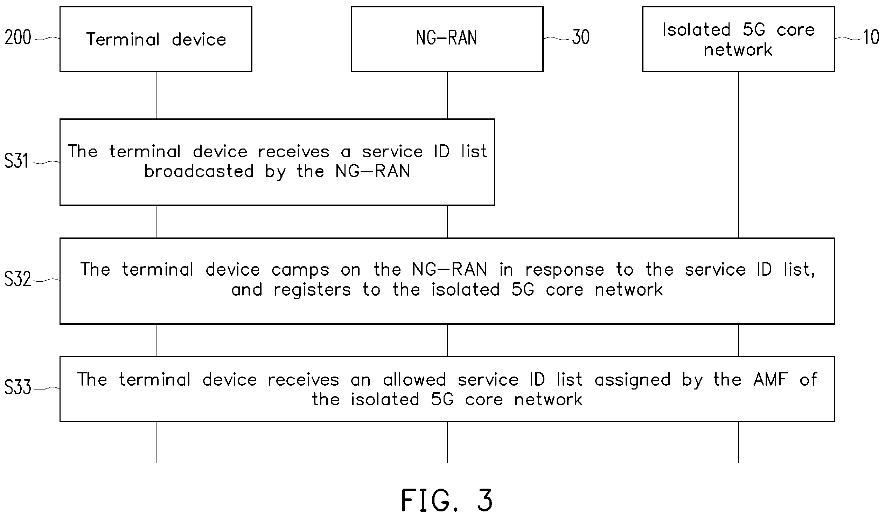

FIG. 3 illustrates a signaling diagram of the terminal device 200 registering to the isolated 5G core network 10 according to an embodiment of the disclosure. In step S31, the terminal device 200 can receive a service ID list broadcasted by the NG-RAN 30, wherein the service ID list is broadcasted through a system information block (SIB). The service ID list broadcasted by the NG-RAN 30 is associated with the isolated 5G core network providing LAN service. Therefore, according to the received service ID list, the terminal device 200 can determine that the NG-RAN 30 supports at least one isolated 5G core network providing LAN service. In this embodiment, the NG-RAN 30 at least supports the isolated 5G core network 10, but the disclosure is not limited thereto. For example, other than supporting the isolated 5G core network 10, the NG-RAN 30 may further support the isolated 5G core network 20 shown in FIG. 1, for example.

In step S32, the terminal device 200 registers to the isolated 5G core network 10 according to the service ID list. Specifically, the terminal device 200 camps on the NG-RAN 30 in response to the service ID list, and detects whether the isolated 5G core network exists on the NG-RAN 30. After the isolated 5G core network 10 is detected, the terminal device 200 can register to the isolated 5G core network 10. In this embodiment, subscription or registration procedure of the terminal device 200 can be handled by the AMF or a user data management (UDM) entity in the isolated 5G core network 10.

In step S33, after the terminal device 200 registers to the isolated 5G core network 10, the AMF of the isolated 5G core network 10 (as shown in FIG. 2) forwards an allowed service ID list to the terminal device 200 through the NG-RAN 30 according to registration information of the terminal device 200. The terminal device 200 receives the allowed service ID list assigned by the AMF of the isolated 5G core network 10. Service IDs corresponding to available services provided by the isolated 5G core network 10 are included in the allowed service ID list. The terminal device 200 can indicate to the isolated 5G core network 10 a to-be-requested service through the service IDs listed in the service ID list.

In an embodiment, if the terminal device 200 intends to register to the isolated 5G core network 10, the terminal device 200 needs to unregister to a public mobile phone network currently in use. For instance, the terminal device 200 can unregister to the public land mobile network currently serving the terminal device 200 in response to registering to the isolated 5G core network 10. In an embodiment, the terminal device 200 may also camp on both the isolated 5G core network 10 and the public land mobile network, and the disclosure is not limited thereto.

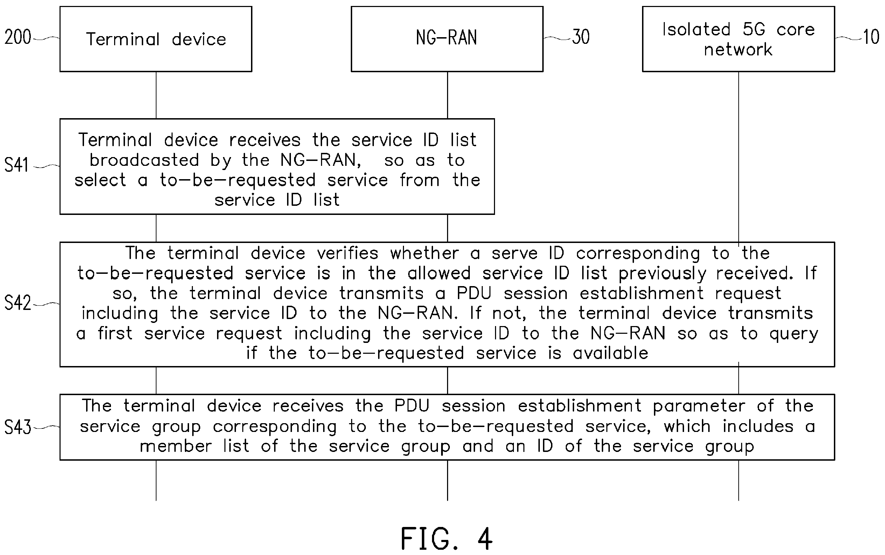

FIG. 4 illustrates a signaling diagram of the terminal device 200 triggering a packet data unit (PDU) session establishment in the isolated 5G core network 10 according to an embodiment of the disclosure. As shown in FIG. 4, after the terminal device 200 registers to the isolated 5G core network 10 and obtains the service ID list, in step S41, the isolated 5G core network 10 broadcasts the service ID list corresponding to currently available services through the NG-RAN 30. The terminal device 200 receives the service ID list broadcasted by the NG-RAN 30 so as to select the to-be-requested service from the service ID list.

In step S42, according to the allowed service ID list, the terminal device 200 transmits a request message to the NG-RAN 30 to indicate to the isolated 5G core network 10 the to-be-requested service of the terminal device 200, so as to obtain the PDU session establishment parameter corresponding to the service group (assumed to be "the service group SG1") of the service. Specifically, the terminal device 200 verifies whether the service ID corresponding to the to-be-requested service is in the allowed service ID list previously received. If so, based on the service ID corresponding to the to-be-requested service in the allowed service ID list, the terminal device 200 transmits a PDU session establishment request including the service ID to the NG-RAN 30. If not, based on the service ID corresponding to the to-be-requested service not in the allowed service ID list, the terminal device 200 transmits a first service request including the service ID to the NG-RAN 30 so as to query the identification code 10 if the to-be-requested service is available. After the isolated 5G core network 10 receives the request message transmitted from the terminal device 200 (i.e., the PDU session establishment request or the first service request) from the NG-RAN 30, the isolated 5G core network 10 converts the service ID in the request message into a corresponding private data network name (P-DNN). The content of the P-DNN is substantially the same as the service ID of the to-be-requested service, but the format of the P-DNN can be read by a network function in the isolated 5G core network 10. The SMF 100 shown by FIG. 2 determines whether the service group SG1 corresponding to the P-DNN is available in response to the request message received by the isolated 5G core network 10 being a message with the first service request (i.e., the service ID corresponding to the P-DNN is not in the allowed service ID list), and generates a determination result. After the SMF 100 reports the determination result to the terminal device 200, the terminal device 200 determines whether to transmit the PDU session establishment request corresponding to the to-be-requested service to the NG-RAN 30 according to the determination result. On the other hand, the SMF 100 obtains the PDU session establishment parameter corresponding to the service group SG1 of the P-DNN from a unified data repository (UDR) network function (not shown in the drawings) of the isolated 5G core network 10 according to the P-DNN in response to the request message received by the isolated 5G core network 10 being the PDU session establishment request (i.e., the service ID corresponding to the P-DNN is in the allowed service ID list). On the other hand, if the service group SG1 corresponding to the to-be-requested service is not yet established, the SMF 100 can establish the service group SG1 through the UPF according to the P-DNN and store data related to the service group SG1 into the UDR. In this embodiment, control and management of the service groups may be handled by a group management function (GMF). For example, the SMF 100 can establish, update or delete the service groups through the GMF.

In step S43, the SMF 100 of the isolated 5G core network 10 transmits the PDU session establishment parameter to the terminal device 200 through the NG-RAN 30. The terminal device 200 receives the PDU session establishment parameter corresponding to the service group SG1 of the to-be-requested service, wherein the PDU session establishment parameter is associated with member information of the service group SG1. Specifically, the PDU session establishment parameter includes the member list of the service group SG1 and the ID of the service group SG1, and the member list includes the member ID of each of the terminal devices in the service group SG1.

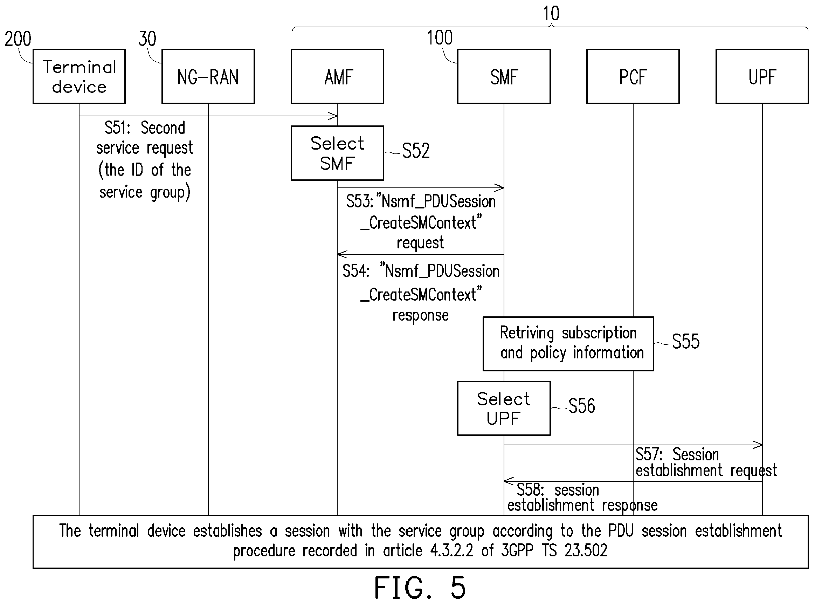

FIG. 5 illustrates a signaling diagram of the terminal device 200 triggering a service request procedure according to an embodiment of the disclosure. In step S51, the terminal device 200 transmits a second service request to the AMF through the NG-RAN 30, wherein the second service request includes the ID of the service group SG1 corresponding to the to-be-requested service. In an embodiment, the second service request further includes the member IDs corresponding to the terminal devices in the service group SG1. The ID of the service group SG1 can help the terminal device 200 establish a communication with the corresponding service group SG1, and the member ID can help the terminal device 200 establish a communication with the corresponding terminal device. The ID of the service group SG1 and the member ID of the terminal device may be obtained from the PDU session establishment parameter received by the terminal device 200. The isolated 5G core network 10 converts the ID of the service group SG1 into the P-DNN format for reading by the AMF.

In step S52, the AMF selects the SMF 100 to manage a PDU session associated with the terminal device 200 according to the P-DNN corresponding to the PDU session establishment request. For instance, the AMF can select the SMF 100 responsible for handling the to-be-requested service of the terminal device 200 from one or more SMFs according to the P-DNN.

In step S53, AMF forwards the P-DNN to the SMF 100 through a "Nsmf_PDUSession_CreateSMContext" request. In step S54, the SMF 100 transmits a "Nsmf_PDUSession_CreateSMContext" response to the AMF in response to the received "Nsmf_PDUSession_CreateSMContext" request so as to notify the AMF that the "Nsmf_PDUSession_CreateSMContext" request has been received by the SMF 110.

In step S55, the SMF 100 retrieves subscription and policy information associated with the terminal device 200 from a policy control function (PCF).

In step S56, the SMF 100 selects the UPF according to the subscription and policy information associated with the terminal device 200. Specifically, the SMF 100 establishes a communication channel between the terminal device 200 and the service group SG1 (or the terminal devices in the service group SG1) according to the second service request. Accordingly, the SMF 100 selects the UPF corresponding to the communication channel according to the second service request, and the UPF is used to route the terminal device 200 to the service group SG1 corresponding to the PDU session establishment request.

In step S57, the SMF 100 transmits a session establishment request to the selected UPF through the N4 interface so as to indicate to the UPF that the terminal device 200 intends to join the service group SG1 (or the P-DNN) managed by the UPF. In addition, the SMF 100 can forward a packet detection rule (PDR) or an uplink classifier (UL CL) corresponding to the communication channel to the UPF. Later, when the UPF receives a packet associated with the terminal device 200, the UPF can forward the packet to the corresponding service group SG1 (or the terminal device 200) according to the PDR or the UL CL. With FIG. 2 as an example, if the to-be-requested service of the terminal device 200 corresponds to the UPF2 (i.e., the terminal device 200 joins the service group SG1 managed by the UPF2), after the UPF3 receives the packet corresponding to the terminal device 200, the UPF3 can have the packet forwarded to the UPF2 through the N9 interface according to the PDR or the UL CL corresponding to the terminal device 200, and then transmitted to the terminal device 200 by the UPF2.

In addition, the isolated 5G core network 10 can also command a node in the NG-RAN 30 to a data radio resource block (RB) related to a scheduling of the terminal device 200 so the terminal device 200 can perform one-to-one or one-to-many communication through the NG-RAN 30.

In an embodiment, the SMF 100 can establish the member list of the service group SG1 in the UDR according to the second service request from the terminal device 200, or update the member list of the service group SG1 stored in the UDR according to the second service request. For instance, if the terminal device 200 is the first member in the service group SG1 (i.e., the service group SG1 is not yet established), the SMF 100 can establish the member list including the member ID of the terminal device 200 in the UDR. On the other hand, if related information of the service group SG1 that the terminal device 200 intends to join is previously established in the UDR already, the SMF 100 can add the member ID corresponding to the terminal device 200 to the member list of the service group SG1.

Returning to FIG. 5, in step S58, the UPF transmits a session establishment response to the SMF 100 through the N4 interface. After step S51 to S58 are completed, in an embodiment, the terminal device 200 establishes a session with the service group SG1 of the UPF (or the terminal devices in the service group SG1) according to the PDU session establishment procedure recorded in article 4.3.2.2 of 3GPP TS 23.502. For instance, the terminal device 200 can receive an acceptance corresponding to the second service request from the isolated 5G core network 10 or the NG-RAN 30, and establishes a radio resource control (RRC) layer connection with the terminal device in the service group through the NG-RAN 30.

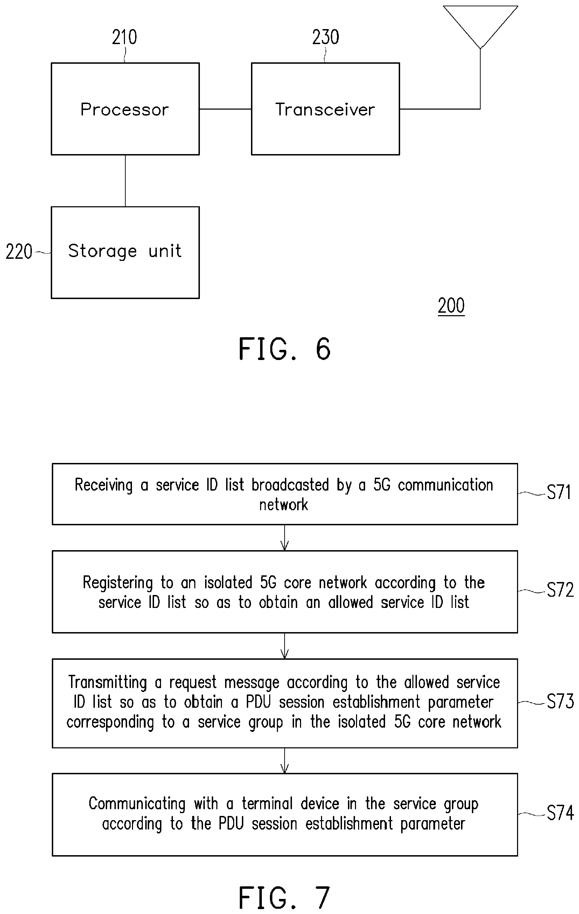

FIG. 6 illustrates a schematic diagram of the terminal device 200 according to an embodiment of the disclosure. The terminal device 200 is, for example, an electronic device that has a SIM card or supports any type of the 5G communication network. The terminal device 200 includes, but not limited to, a processor 210, a storage unit 220 and a transceiver 230.

The processor 210 may be, for example, a central processing unit (CPU) or other programmable devices for general purpose or special purpose, such as a microprocessor and a digital signal processor (DSP), a programmable controller, an application specific integrated circuit (ASIC), a graphic processor (GPU) or other similar elements or a combination of above-mentioned elements.

The transceiver 230 is coupled to the processor 210. The transceiver can transmit an uplink signal and receive a downlink signal. The transceiver 230 can also perform operations such as low noise amplifying (LNA), impedance matching, frequency mixing, frequency up and down frequency conversion, filtering, amplification and other similar operations. The transceiver 230 may further include an antenna array, and the antenna array may include one or more antennas for transmitting and receiving an omnidirectional antenna beam or a directional antenna beam.

The storage unit 220 is coupled to the processor 210, and is, for example, a random access memory (RAM), a read-only memory (ROM), a flash memory, a hard disk drive (HDD), a hard disk drive (HDD), a solid state drive (SSD) or other similar elements in any stationary or movable form, or a combination of the above-mentioned elements. The storage unit 220 stores a plurality of modules or programs for the processor 210 to access so the processor 210 can perform various functions of the terminal device 200.

FIG. 7 illustrates a flowchart of a method of providing LAN service based on a 5G communication network according to an embodiment of the disclosure. Here, steps in FIG. 7 may be implemented by the terminal device 200 shown in FIG. 6. In step S71, a service ID list broadcasted by the 5G communication network is received. In step S72, an isolated 5G core network is being registered to according to the service ID list so as to obtain an allowed service ID list. In step S73, a request message is transmitted according to the allowed service ID list so as to obtain a packet data unit (PDU) session establishment parameter corresponding to a service group in the isolated 5G core network. In step S74, the terminal device in the service group is being communicated with according to the PDU session establishment parameter.

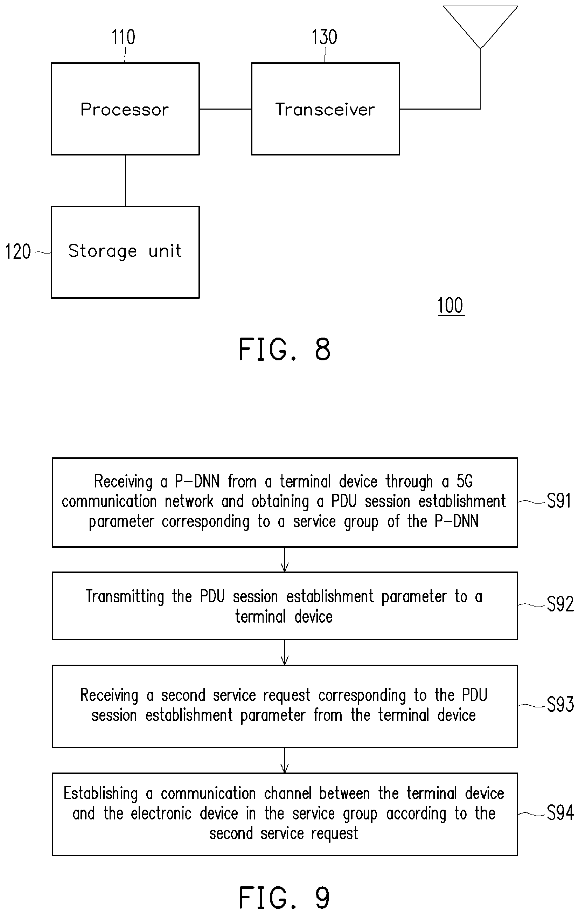

FIG. 8 illustrates a schematic diagram of the SMF 100 according to an embodiment of the disclosure. Here, the SMF 100 may be implemented by a server, but the disclosure is not limited thereto. The SMF 100 includes, but not limited to, a processor 110, a storage unit 120 and a transceiver 130.

The processor 110 is, for example, a central processing unit (CPU) or other programmable devices for general purpose or special purpose, such as a microprocessor and a digital signal processor (DSP), a programmable controller, an application specific integrated circuit (ASIC) or other similar elements or a combination of above-mentioned elements.

The transceiver 130 is coupled to the processor 110. The transceiver 130 can transmit an uplink signal and receive a downlink signal. The transceiver 130 can also perform operations such as low noise amplifying, impedance matching, frequency mixing, frequency up and down frequency conversion, filtering, amplification and other similar operations. The transceiver 130 may further include an antenna array, and the antenna array may include one or more antennas for transmitting and receiving an omnidirectional antenna beam or a directional antenna beam.

The storage unit 120 is coupled to the processor 110, and is, for example, a random access memory (RAM), a read-only memory (ROM), a flash memory, a hard disk drive (HDD), a hard disk drive (HDD), a solid state drive (SSD) or other similar elements in any stationary or movable form, or a combination of the above-mentioned elements. The storage unit 120 stores a plurality of modules or programs for the processor 110 to access so the processor 110 can perform various functions of the SMF 100.

FIG. 9 illustrates a flowchart of a method of providing LAN service based on a 5G communication network according to an embodiment of the disclosure. Here, steps in FIG. 9 may be implemented by the SMF 100 shown in FIG. 8. In step S91, a private data network name (P-DNN) is received from a terminal device through a 5G communication network and a packet data unit (PDU) session establishment parameter corresponding to a service group of the P-DNN is obtained. In step S92, the PDU session establishment parameter is transmitted to a terminal device. In step S93, a second service request corresponding to the PDU session establishment parameter is received from the terminal device. In step S94, a communication channel between the terminal device and the electronic device in the service group is established according to the second service request.

In summary, the terminal device in an embodiment of the disclosure can register to the isolated 5G core network by receiving the broadcasted service ID list, and the isolated 5G core network can be provided to the employees in the enterprise for use as the LAN. The server can transmit the allowed service ID list to the terminal device so that the terminal device can transmit the corresponding request message according to the needs of the user. The server will establish the session corresponding to the terminal device according to the request message or check if the requested service is available for the terminal device. After the acceptance is received from the server, the terminal device can join the service group in the 5G core network, and perform one-to-one or one-or-many communications with the members in the service group. According to the method provided by an embodiment of the disclosure, the enterprise can build up multiple 5G core networks that are independent and have the capability to providing LAN service. In this way, the employees can register to and access the service groups in LAN by using the terminal devices that support the 5G communication network without using the terminal devices provided by the enterprise. In other words, the method of an embodiment of the disclosure can achieve a bring your own device (BYOD). Moreover, in comparison with LAN established based on Ethernet, the cost of LAN established based on the existing network function of the 5G core network may be significantly reduced.

## Claims

1. A method of providing LAN service based on a 5G communication network (30) adapted to a terminal device (200), **characterized in that** the method comprising:
receiving (S31, S71) a service ID list broadcasted by the 5G communication network (30);
registering (S72) to an isolated 5G core network (10) according to the service ID list so as to obtain an allowed service ID list;
transmitting (S73) a request message according to the allowed service ID list so as to obtain a packet data unit, PDU, session establishment parameter corresponding to a service group in the isolated 5G core network (10); and
communicating (S74) with an electronic device in the service group according to the PDU session establishment parameter.

2. The method according to claim 1, wherein the step of registering (S72) to the isolated 5G core network (10) according to the service ID list so as to obtain the allowed service ID list comprises:
camping (S32) on the 5G communication network (30) in response to the service ID list;
detecting the isolated 5G core network (10) on the 5G communication network (30); and
registering (S32) to the isolated 5G core network (10).

3. The method according to claim 1, wherein the step of transmitting (S73) the request message according to the allowed service ID list so as to obtain the PDU session establishment parameter corresponding to the service group in the isolated 5G core network (10) comprises:
verifying (S42) whether a service ID corresponding to a to-be-requested service is in the allowed service ID list;
based on the service ID corresponding to the to-be-requested service in the allowed service ID list, transmitting (S42) a PDU session establishment request including the service ID to the 5G communication network (30); or based on the service ID corresponding to the to-be-requested service not in the allowed service ID list, transmitting (S42) a first service request including the service ID to the 5G communication network (30) so as to query the isolated 5G core network (10) if the to-be-requested service is available through the 5G communication network (30).

4. The method according to claim 1, wherein the PDU session establishment parameter comprises a member list of the service group and an ID of the service group, and the step of communicating (S74) with the electronic device in the service group according to the PDU session establishment parameter comprises:
transmitting (S51) a second service request to the 5G communication network (30), wherein the second service request comprises the ID of the service group and a member ID corresponding to the electronic device;
receiving an acceptance corresponding to the second service request; and
establishing a radio resource control layer connection with the electronic device through the 5G communication network (30) in response to the acceptance.

5. The method according to claim 1, wherein the service ID list is broadcasted through a system information block, and the 5G communication network (30) supports a plurality of 5G core networks including the isolated 5G core network (10).

6. The method according to claim 1, further comprising:
unregistering to a public land mobile network currently serving the terminal device (200) in response to registering to the isolated 5G core network (10).

7. A method of providing LAN service based on a 5G communication network (30) adapted to a server (100), **characterized in that** the method comprising:
receiving (S91) a private data network name, P-DNN, from a terminal device (200) through the 5G communication network (30) and obtaining (S91) a packet data unit, PDU, session establishment parameter corresponding to a service group of the P-DNN;
transmitting (S92) the PDU session establishment parameter to the terminal device (200);
receiving (S93) a service request corresponding to the PDU session establishment parameter from the terminal device (200); and
establishing (S94) a communication channel between the terminal device (200) and an electronic device in the service group according to the service request.

8. The method according to claim 7, wherein the step of receiving (S91) the P-DNN from the terminal device (200) and obtaining (S91) the PDU session establishment parameter corresponding to the service group of the P-DNN comprises:
determining whether the service group corresponding to the P-DNN is available based on a service ID corresponding to the P-DNN not in an allowed service ID list, and generating a determination result; and
reporting the determination result to the terminal device (200).

9. The method according to claim 7, wherein the step of receiving (S91) the P-DNN from the terminal device (200) and obtaining (S91) the PDU session establishment parameter corresponding to the service group of the P-DNN comprises at least one of the followings:
obtaining the PDU session establishment parameter from a unified data repository network function according to the P-DNN; and
establishing the service group according to the P-DNN.

10. The method according to claim 7, wherein the PDU session establishment parameter comprises a member list of the service group and an ID of the service group, and the step of establishing (S94) the communication channel between the terminal device (200) and the electronic device in the service group according to the service request comprises:
establishing or updating the member list of the service group according to the service request.

11. The method according to claim 7, further comprising:
selecting a user plane function corresponding to the communication channel according to the service request; and
forwarding a packet detection rule corresponding to the communication channel to the user plane function, wherein
the server (100) corresponds to a session management function in an isolated 5G core network (10).

12. A terminal device (200) supporting a 5G communication network (30), **characterized in that** the terminal device (200) comprising:
a transceiver (230); and
a processor (210) coupled to the transceiver (230), the processor (210) being configured to:
receive a service ID list broadcasted by the 5G communication network (30) through the transceiver (230);
register to an isolated 5G core network (10) according to the service ID list so as to obtain an allowed service ID list through the transceiver (230);
transmit a request message through the transceiver (230) according to the allowed service ID list so as to obtain a packet data unit, PDU, session establishment parameter corresponding to a service group in the isolated 5G core network (10); and
communicate with an electronic device in the service group according to the PDU session establishment parameter.

13. The terminal device (200) according to claim 12, wherein the processor (210) is further configured to:
camp on the 5G communication network (30) in response to the service ID list;
detect the isolated 5G core network (10) on the 5G communication network (30) through the transceiver (230); and
register to the isolated 5G core network (10).

14. The terminal device (200) according to claim 12, wherein the processor (210) is further configured to:
verify whether a service ID corresponding to a to-be-requested service is in the allowed service ID list;
based on the service ID corresponding to the to-be-requested service in the allowed service ID list, transmit a PDU session establishment request including the service ID to the 5G communication network (30) through the transceiver (230); or based on the service ID corresponding to the to-be-requested service not in the allowed service ID list, transmit a first service request including the service ID to the 5G communication network (30) through the transceiver (230) so as to query the isolated 5G core network (10) if the to-be-requested service is available through the 5G communication network (30).

15. The terminal device according to claim 12, wherein the PDU session establishment parameter comprises a member list of the service group and an ID of the service group, and the processor (210) is further configured to:
transmit a second service request to the 5G communication network (30) through the transceiver (230), wherein the second service request comprises the ID of the service group and a member ID corresponding to the electronic device;
receive an acceptance corresponding to the second service request through the transceiver (230); and
establish a radio resource control layer connection with the electronic device through the 5G communication network (30) in response to the acceptance.

16. The terminal device according to claim 12, wherein the service ID list is broadcasted through a system information block, and the 5G communication network (30) supports a plurality of 5G core networks including the isolated 5G core network (10).

17. A server (100) supporting a 5G communication network (30), **characterized in that** the server (100) comprising:
a transceiver (130); and
a processor (110) coupled to the transceiver (130), the processor (110) being configured to:
receive a private data network name, P-DNN, from a terminal device (200) through the 5G communication network (30) and obtain a packet data unit, PDU, session establishment parameter corresponding to a service group of the P-DNN by using the transceiver (130);
transmit the PDU session establishment parameter to the terminal device (200) through the transceiver (130);
receive a service request corresponding to the PDU session establishment parameter from the terminal device (200) through the transceiver (130); and
establish a communication channel between the terminal device (200) and an electronic device in the service group according to the service request.

18. The server (100) according to claim 17, wherein the processor (130) is further configured to:
determine whether the service group corresponding to the P-DNN is available based on a service ID corresponding to the P-DNN not in an allowed service ID list, and generate a determination result; and
report the determination result to the terminal device (200) through the transceiver (130).

19. The server (100) according to claim 17, wherein the processor (130) is further configured to perform at least one of the followings:
obtain the PDU session establishment parameter from a unified data repository network function through the transceiver (130) according to the P-DNN; and
establish the service group according to the P-DNN.

20. The server (100) according to claim 17, wherein the PDU session establishment parameter comprises a member list of the service group and an ID of the service group, and the processor (110) is further configured to:
establish or update the member list of the service group according to the service request.

21. The server (100) according to claim 17, wherein the processor (110) is further configured to:
select a user plane function corresponding to the communication channel according to the service request; and
forward a packet detection rule corresponding to the communication channel to the user plane function through the transceiver (130), wherein
the server (100) corresponds to a session management function in an isolated 5G core network (10).
